# EUROPEAN PATENT APPLICATION

(11) **EP 3 048 803 A1**
(43) Date of publication of application: **27.07.2016**
(21) Application number: 14845119.8
(22) Date of filing: 14.07.2014
(51) Int. Cl.: H04Q 9/00, E05B 49/00, G06F 21/44

(54) **TRANSMITTING/RECEIVING SYSTEM, TRANSMISSION DEVICE, RECEIVING DEVICE, CONTROL METHOD FOR SAME, AND PROGRAM**

(30) Priority: 20.09.2013 JP 2013195184
(71) Applicant: Aplix IP Holdings Corporation, Tokyo 169-0051 (JP)
(72) Inventor: KORIYAMA, Ryu, Tokyo 1690051 (JP)
(74) Representative: Cohausz & Florack
(86) International application number: PCT/JP2014/068681
(87) International publication number: WO 2015/040939

(57) **Abstract**

A code for authentication is shared between or among a plurality of transmitting devices or a plurality of receiving devices in a transmit/receive system which implements authentication using a code between transmitting and receiving devices.

Each transmitting device includes a variable code retaining unit, a control signal transmitting unit, a variable code updating unit, and a unit for transmitting variable code for synchronization. The variable code retaining unit retains a variable code. The control signal transmitting unit transmits a control signal including a variable code. The variable code updating unit updates the variable code after transmission of the control signal. The unit for transmitting variable code for synchronization transmits the updated variable code to other transmitting devices of the plurality of transmitting devices to allow the other transmitting devices to set such code as the latest variable code.

## Description

### Technical Field

The present invention relates to a transmit/receive system and particularly to a transmit/receive system which implements authentication using a variable code between transmitting and receiving devices, a transmitting device, a receiving device, and a control method therein, and, besides, a program causing a computer to execute that method.

### Background Art

A technique has heretofore been known that embeds a variable code whose content varies whenever being transmitted into a control signal in order to counter a replay attack. The replay attack is an action to pass authentication at a receiving device fraudulently by sniffing and copying a signal transmitted from a transmitting device to the receiving device and transmitting the thus copied data to the receiving device. Because such replay attack copies transmission data and transmits that data as it is, only encrypting data may not be useful for a countermeasure against it.

In the case of authentication using a variable code, the variable code within data being transmitted by a transmitting device varies whenever it is transmitted. Consequently, if transmission data has been copied and transmitted as it is to a receiving device, the variable code included in the transmission data is regarded as the one that has already been used and, therefore, it is impossible to pass authentication at the receiving device and that data is detected as a fraudulent signal. As examples of authentication using a variable code, for example, a rolling code (hopping code) which is used for key-less entry of an automobile or the like, a one-time password, etc. are known.

As a system using such a variable code, for example, in a system where a passcode is entered from a mobile phone when starting the engine of a hydraulic shovel, a security system is disclosed that changes a setting of the hydraulic shovel through the use of a server in response to a change made to the passcode of the mobile phone (refer to, e.g., Patent Literature (PTL) 1). Besides, a transmitter is disclosed that varies an ID number which is set when an auto-locking mechanism is controlled wirelessly according to a rolling code scheme, each time the ID number is transmitted (refer to, e.g., PTL 2).

### Citation List

### Patent Literature

PTL 1: Japanese Patent Publication No. 4476513
PTL 2: Japanese Patent Publication No. 4367986

### Summary of Invention

### Technical Problem

In the existing technologies mentioned above, improvement in security is pursued by appropriately changing the code that is used for authentication. In these existing technologies, however, in a situation where there are a plurality of transmitting devices, a change to the code, once having made by a transmitting device, makes other transmitting devices unable to transmit properly. The same occurs also in a situation where there are a plurality of receiving devices; for a receiving device that failed to respond to a change to the code made by a transmitting device, its subsequent proper operation cannot be assured.

The present invention, which has been created in consideration of these circumstances, is intended to share a code for authentication between or among a plurality of transmitting devices or a plurality of receiving devices in a transmit/receive system which implements authentication using a code between transmitting and receiving devices.

### Solution to Problem

The present invention has been developed to overcome the above-noted problem and its first aspect resides in a transmit/receive system including a plurality of transmitting devices which can communicate with one another and a receiving device. Each of the aforementioned plurality of transmitting devices includes a variable code retaining unit that retains a variable code, a control signal transmitting unit that transmits a control signal including the variable code, and a unit for transmitting variable code for synchronization that transmits the variable code updated after transmission of the control signal to other transmitting devices of the plurality of transmitting devices to allow the other transmitting devices to set such code as the latest variable code. The aforementioned receiving device includes a verification code retaining unit that retains a verification code and a code authentication unit that authenticates whether or not the control signal is valid by comparing the variable code included in the control signal received from any of the plurality of transmitting devices with the verification code, supplies the control signal authenticated to be valid to equipment to be controlled, and has the variable code included in the control signal authenticated to be valid retained in the verification code retaining unit as a new verification code. The first aspect embraces a transmitting device in such transmit/receive system and a communication control method for use in such system as well as a program causing a computer to implement that method. This aspect of the invention produces an effect of allowing other transmitting devices to synchronize a variable code updated at each of the plurality of transmitting devices.

A second aspect of the present invention resides in a transmit/receive system including a transmitting device and a plurality of receiving devices which can communicate with one another. The aforementioned transmitting device includes a variable code retaining unit that retains a variable code, a control signal transmitting unit that transmits a control signal including the variable code, and a variable code updating unit that updates the variable code after transmission of the control signal. Each of the aforementioned plurality of receiving devices includes a verification code retaining unit that retains a verification code, a code authentication unit that authenticates whether or not the control signal is valid by comparing the variable code included in the control signal received from the transmitting device with the verification code, supplies the control signal authenticated to be valid to equipment to be controlled, and has the variable code included in the control signal authenticated to be valid retained in the verification code retaining unit as a new verification code, and a unit for transmitting verification code for synchronization that transmits the new verification code to other receiving devices of the plurality of receiving devices to allow the other receiving devices to set such code as the latest verification code. The second aspect embraces a transmitting device in such transmit/receive system and a communication control method for use in such system as well as a program causing a computer to implement that method. This aspect of the invention produces an effect of allowing other receiving devices to synchronize a verification code updated at each of the plurality of receiving devices.

### Advantageous Effects of Invention

According to the present invention, it is possible to provide a brilliant advantageous effect of making it possible to share a code for authentication between or among a plurality of transmitting devices or a plurality of receiving devices in a transmit/receive system which implements authentication using a code between transmitting and receiving devices.

### Brief Description of Drawings

[Fig. 1] Fig. 1 is a diagram depicting an example of overall architecture of a transmit/receive system according to a first embodiment of the present invention.
[Fig. 2] Fig. 2 is a diagram depicting an example of hardware structure of a transmitting device 100 according to the first embodiment of the present invention.
[Fig. 3] Fig. 3 is a diagram depicting an example of hardware structure of a receiving device 200 according to the first embodiment of the present invention.
[Fig. 4] Fig. 4 is a diagram depicting an example of functional structure of a transmitting device 100 according to the first embodiment of the present invention.
[Fig. 5] Fig. 5 is a diagram depicting an example of functional structure of a receiving device 200 according to the first embodiment of the present invention.
[Fig. 6] Fig. 6 is a sequence diagram depicting an example of operation according to the first embodiment of the present invention.
[Fig. 7] Fig. 7 is a diagram depicting an example of overall architecture of a transmit/receive system according to a second embodiment of the present invention.
[Fig. 8] Fig. 8 is a diagram depicting an example of functional structure of a transmitting device 100 according to the second embodiment of the present invention.
[Fig. 9] Fig. 9 is a diagram depicting an example of functional structure of a receiving device 200 according to the second embodiment of the present invention.
[Fig. 10] Fig. 10 is a sequence diagram depicting an example of operation according to the second embodiment of the present invention.
[Fig. 11] Fig. 11 is a diagram depicting an example of eventuality in case one of receiving devices 200 having failed to update a verification code according to the second embodiment of the present invention.
[Fig. 12] Fig. 12 is a diagram depicting an example of overall architecture of a transmit/receive system according to a third embodiment of the present invention.
[Fig. 13] Fig. 13 is a sequence diagram depicting an example of operation according to the third embodiment of the present invention.
[Fig. 14] Fig. 14 is a diagram depicting an example of overall architecture of a transmit/receive system according to a fourth embodiment of the present invention.
Fig. 15] Fig. 15 is a diagram depicting an example of hardware structure of a server 500 according to the fourth embodiment of the present invention.
[Fig. 16] Fig. 16 is a diagram depicting an example of functional structure of the server 500 according to the fourth embodiment of the present invention.
[Fig. 17] Fig. 17 is a diagram depicting an example of hardware structure of a transmitting device 100 according to a fifth embodiment of the present invention.
[Fig. 18] Fig. 18 is a diagram depicting an example of hardware structure of a server 500 according to the fifth embodiment of the present invention.
[Fig. 19] Fig. 19 is a diagram depicting an example of functional structure of a transmitting device 100 according to the fifth embodiment of the present invention.
[Fig. 20] Fig. 20 is a diagram depicting an example of functional structure of the server 500 according to the fifth embodiment of the present invention.
[Fig. 21] Fig. 21 is a sequence diagram depicting a first example of operation according to a sixth embodiment of the present invention.
[Fig. 22] Fig. 22 is a sequence diagram depicting a second example of operation according to the sixth embodiment of the present invention.
[Fig. 23] Fig. 23 is a diagram depicting an example of overall architecture of a transmit/receive system according to a seventh embodiment of the present invention.
[Fig. 24] Fig. 24 is a diagram depicting an example of overall architecture of a transmit/receive system according to an eighth embodiment of the present invention.

### Description of Embodiments

In the following, embodiments for carrying out the present invention will be described.

### 1. First Embodiment

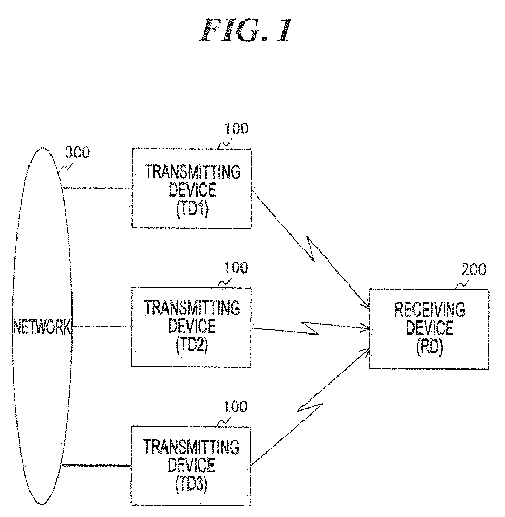

Fig. 1 is a diagram depicting an example of overall architecture of a transmit/receive system according to a first embodiment of the present invention. This transmit/receive system according to the first embodiment includes a plurality of transmitting devices 100 (TD1 to TD3), a receiving device 200 (RD), and a network 300. Although this diagram depicts three transmitting devices 100, there may be any number of transmitting devices 100 more than one.

Each transmitting device 100 is a device that transmits a control signal to the receiving device 200. In this control signal, a variable code is included. This variable code is updated whenever the control signal is transmitted. As a communication scheme between each transmitting device 100 and the receiving device 200, for example, Bluetooth (a registered trademark) among others is assumed.

The receiving device 200 is a device that receives a control signal from a transmitting device 100. This receiving device 200 retains a verification code, authenticates whether or not the control signal is valid by comparing a variable code included in a control signal it received with the verification code. If the authentication is successful, the receiving device 200 supplies the control signal to equipment to be controlled and retains the variable code included in the control signal as a new verification code.

The network 300 is a network that interconnects the plurality of transmitting devices 100. Through this network 300, the plurality of transmitting devices 100 communicate with one another, thereby enabling synchronizing variable codes among the transmitting devices 100. As this network 300, for example, an ad-hoc communication network based on Bluetooth (a registered trademark) among others can be assumed.

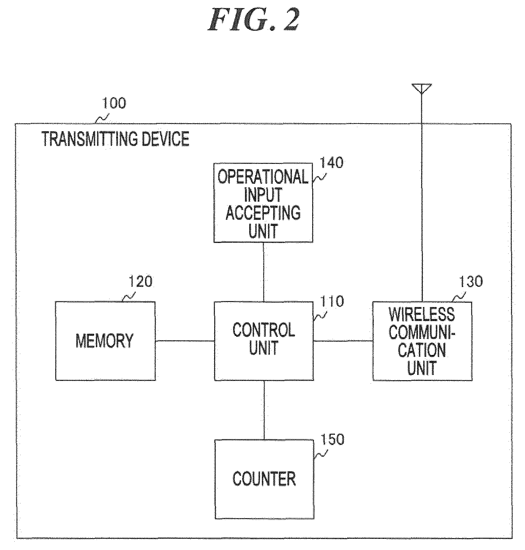

Fig. 2 is a diagram depicting an example of hardware structure of a transmitting device 100 according to the first embodiment of the present invention. This transmitting device 100 includes a control unit 110, a memory 120, a wireless communication unit 130, an operational input accepting unit 140, and a counter 150.

The control unit 110 controls all parts of the transmitting device 100. In particular, this control unit 100, gives a command to generate a control signal destined for the receiving device 200 and performs processing of a synchronization signal received from any other transmitting device 100. Also, this control unit 110 executes updating a variable code. Updating a variable code is performed after transmission of a control signal or upon receiving a synchronization command from any other transmitting device 100, etc.

The memory 120 is a memory that stores a program running in the transmitting device 100, a variable code, etc.

The wireless communication unit 130 performs wireless communication with another device. This wireless communication unit 130 transmits a control signal including a variable code to the receiving device 200. Besides, it transmits a variable code retained in the memory 120 as a synchronization signal to other transmitting devices 100. Besides, it receives a synchronization signal from any other transmitting device 100 and supplies that signal to the control unit 110.

The operational input accepting unit 140 accepts an operational input from a user. This operational input accepting unit 140 can be implemented by, for example, input buttons, a touch panel, and the like.

The counter 150 is a counter that is used by the control unit 110 for updating variable code after transmission of a control signal. It can be implemented as, for example, an incremental counter which increments by "1", each time a control signal is transmitted.

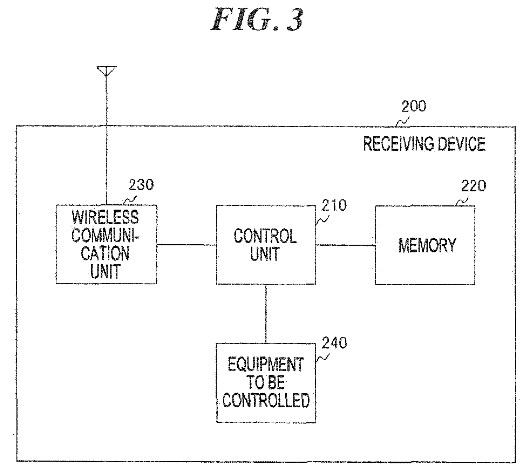

Fig. 3 is a diagram depicting an example of hardware structure of the receiving device 200 according to the first embodiment of the present invention. This receiving device 200 includes a control unit 210, a memory 220, a wireless communication unit 230, and equipment to be controlled 240.

The control unit 210 controls all parts of the receiving device 200. In particular, this control unit performs authentication of a control signal received from a transmitting device 100 and control of the equipment to be controlled 240, etc. Also, this control unit 210 executes updating a verification code for authenticating a variable code. Updating a verification code is performed when authentication has been succeeded, etc.

The memory 220 is a memory that stores a program running in the receiving device 200, a verification code, etc.

The wireless communication unit 230 performs communication with another device. This wireless communication unit 230 receives a control signal including a variable code from a transmitting device 100. Besides, upon having received a control signal, this wireless communication unit 230 transmits a receipt acknowledgement to the transmitting device 100 that transmitted the control signal.

The equipment to be controlled 240 is equipment that is to be controlled from a transmitting device 100; for example, an air-conditioner (air-conditioning equipment), a lighting device, etc. are assumed. If the equipment to be controlled 240 is an air-conditioner, the control signal is assumed to convey control information such as "increase temperature by 1 °C".

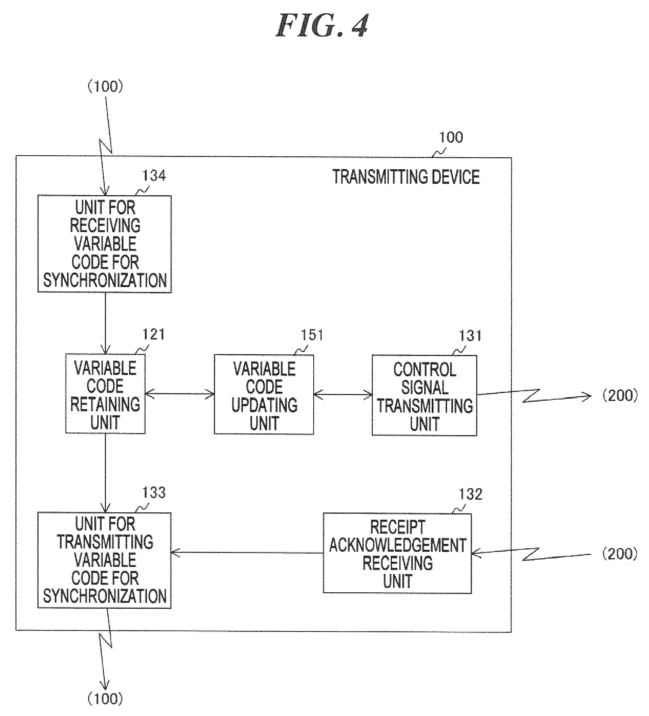

Fig. 4 is a diagram depicting an example of functional structure of a transmitting device 100 according to the first embodiment of the present invention. In the hardware structure described previously, each of the plurality of transmitting devices 100 has the following functions: a variable code retaining unit 121, a control signal transmitting unit 131, a variable code retaining unit 121, a control signal transmitting unit 131, a receipt acknowledgement receiving unit 132, a unit for transmitting variable code for synchronization 133, a unit for receiving variable code for synchronization 134, and a variable code updating unit 151.

The variable code retaining unit 121 retains a variable code. This variable code retaining unit 121 can be, for example, implemented by the memory 120.

The control signal transmitting unit 131 transmits a control signal including a variable code to the receiving device 200. This control signal transmitting unit 131 can be, for example, implemented by the control unit 110 and the wireless communication unit 130.

The receipt acknowledgement receiving unit 132 receives a receipt acknowledgement in response to a control signal from the receiving device 200. This receipt acknowledgement receiving unit 132 can be implemented, for example, by the control unit 110 and the wireless communication unit 130.

The variable code updating unit 151 updates a variable code after transmission of a control signal. This variable code updating unit 151 can be implemented, for example, by the control unit 110 and the counter 150.

The unit for transmitting variable code for synchronization 133 transmits an updated variable code through a synchronization signal to other transmitting devices 100 to allow those devices to set such code as the latest variable code. This unit for transmitting variable code for synchronization 133 can be implemented, for example, by the control unit 110 and the wireless communication unit 130.

The unit for receiving variable code for synchronization 134 receives an updated variable code through a synchronization signal from any other transmitting device 100 and has the updated variable code retained in the variable code retaining unit 121. This unit for receiving variable code for synchronization 134 can be implemented, for example, by the control unit 110 and the wireless communication unit 130.

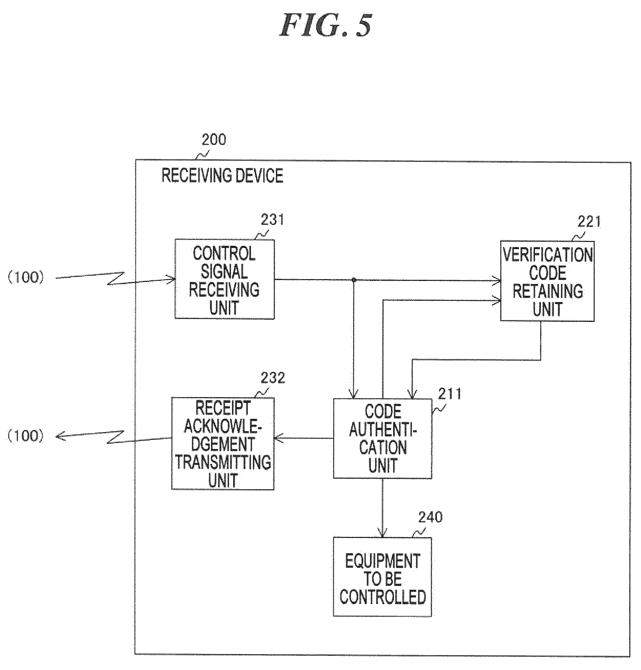

Fig. 5 is a diagram depicting an example of functional structure of the receiving device 200 according to the first embodiment of the present invention. In the hardware structure described previously, the receiving device 200 includes a code authentication unit 211, a verification code retaining unit 221, a control signal receiving unit 231, and a receipt acknowledgement transmitting unit 232.

The verification code retaining unit 221 retains a verification code. This verification code retaining unit 221 can be implemented, for example, by the memory 220.

The control signal receiving unit 231 receives a control signal from a transmitting device 100. This control signal receiving unit 231 can be implemented, for example, by the control unit 210 and the wireless communication unit 230.

The code authentication unit 211 authenticates whether or not the control signal is valid by comparing a variable code included in a control signal with a verification code retained in the verification code retaining unit 221. For instance, if the variable code value is larger than the verification code value, it authenticates that the received control signal is valid. If the authentication is successful, the code authentication unit 211 accepts the control signal and supplies the control signal to the equipment to be controlled 240. In this case, besides, the code authentication unit 211 has the variable code value included in the control signal retained as a new verification code in the verification code retaining unit 221, thus updating the verification code. This code authentication unit 211 can be implemented, for example, by the control unit 210.

The receipt acknowledgement transmitting unit 232 sends a notification of having received the control signal to the transmitting device 100 that transmitted the control signal. If the control signal received from a transmitting device 100 has been authenticated to be valid, this receipt acknowledgement transmitting unit 232 transmits its receipt acknowledgement to the transmitting device 100. This receipt acknowledgement transmitting unit 232 can be implemented, for example, by the control unit 210 and the wireless communication unit 230.

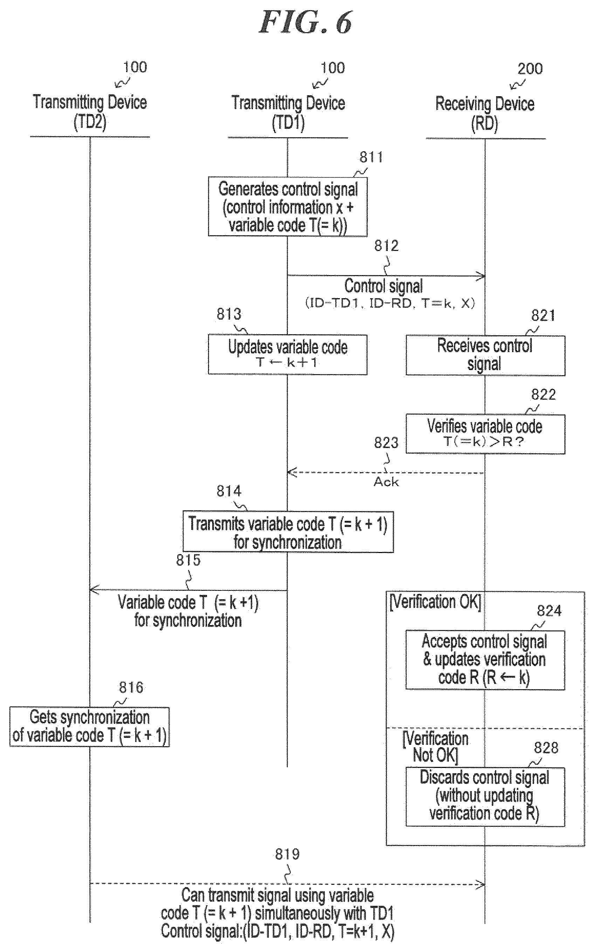

Fig. 6 is a sequence diagram depicting an example of operation according to the first embodiment of the present invention. In this diagram, a control signal is made up of control information X and a variable code T. A header of the control signal includes ID-TD1 which designates a source transmitting device 100 and ID-RD which designates a destination receiving device 200. The receiving device 200 retains a verification code R. A variable k is used to represent transition of the variable code T and the verification code R.

A transmitting device 100 (TD1) generates a control signal (811) and transmits it to the receiving device 200 (812). After having transmitted the control signal, the transmitting device 100 (TD1) updates the variable code T from k to k + 1 (813).

Upon receiving the control signal (821) transmitted by the transmitting device 100 (TD1), the receiving device 200 compares the variable code T included in the control signal with the verification code R it has retained beforehand (822). Then, if, by way of example, the value of the variable code T is larger than the value of the verification code R, the receiving device authenticates the received control signal to be valid.

If the authentication is successful, the receiving device 200 accepts the control signal and supplies the control signal to the equipment to be controlled 240 (824). In this case, besides, the receiving device updates the verification code R to the value (k) of the variable code T (824). Thereby, the control signal will not be authenticated in next and subsequent authentication actions with the value (k) of the old variable code T.

Otherwise, if the authentication is unsuccessful, the receiving device 200 discards the control signal (828). Therefore, the control signal is not supplied to the equipment to be controlled 240 and updating the verification code R is not executed.

If the authentication is successful, the receiving device 200 may be adapted to transmit a receipt acknowledgement Ack back to the transmitting device 100 that transmitted the control signal (823). In this case, the transmitting device 100 that has received the receipt acknowledgement Ack transmits the variable code T updated to k + 1 to which synchronization should be carried out to another transmitting device 100 (TD2) (814). The variable code T thus transmitted is received by a transmitting device 100 (TD2) (815) and synchronization is carried out (816). In contrast, if the transmitting device 100 does not receive an anticipated receipt acknowledgement Ack, the transmitting device 100 only updates the variable code T (813), but does not perform synchronization. After that, the transmitting device may retransmit the transmission signal. In this way, by synchronizing the variable code T only upon having received a receipt acknowledgement Ack, needless synchronization operation can be avoided. Although it is assumed here that the receiving device 200 transmits back a receipt acknowledgement Ack, a manner in which the variable code T is to be synchronized whenever updated may be adopted without the assumption of this receipt acknowledgement Ack.

In this example, when the variable code T is updated from k to k + 1 at the transmitting device 100 (TD1), the variable code T is synchronized so as to be updated to k + 1 also at the transmitting device 100 (TD2). Therefore, subsequently, the transmitting device 100 (TD2) as well as the transmitting device 100 (TD1) can transmit a valid control signal using the variable code T (819).

In a case where the power of the transmitting device 100 (TD2) is off or communication condition is bad when the variable code is updated at the transmitting device 100 (TD1), the transmitting device 100 (TD2) cannot update the variable code. In this case, at arbitrary timing after recovery of the condition of communication with the transmitting device 100 (TD1), the transmitting device 100 (TD2) queries the transmitting device 100 for the latest variable code (push notification) and carries out the update.

Since it is only required for the transmitting device 100 (TD2) that it can obtain the latest variable code at latest before it transmits a control signal to the receiving device 200, the signaling sequence may be configured such that the transmitting device 100 (TD2) queries another transmitting device 100 on the latest variable code periodically. The signaling sequence may also be configured such that the transmitting device 100 (TD2) queries the transmitting device 100 (TD1) on the latest variable code when it transmits a signal to the receiving device 200. The signaling sequence may generally be configured such that, in case of unsuccessful authentication, the receiving device 200 sends a notification of the unsuccessful authentication as a failure notification Nack to the transmitting device 100 and the transmitting device 100 that has received this failure notification Nack queries another transmitting device 100 on the latest variable code.

In the foregoing context, the device that is to be queried on the latest variable code is not limited to the transmitting device 100 (TD1); such device may be another transmitting device 100 (e.g., TD3) which retains the latest code after accepting synchronization from the transmitting device 100 (TD1).

As described above, according to the first embodiment of the present invention, it is possible to share a variable code by synchronizing variable codes at a plurality of transmitting devices 100 and each of the plurality of transmitting devices 100 can communicate with a receiving device 200 using the identical variable code.

### 2. Second Embodiment

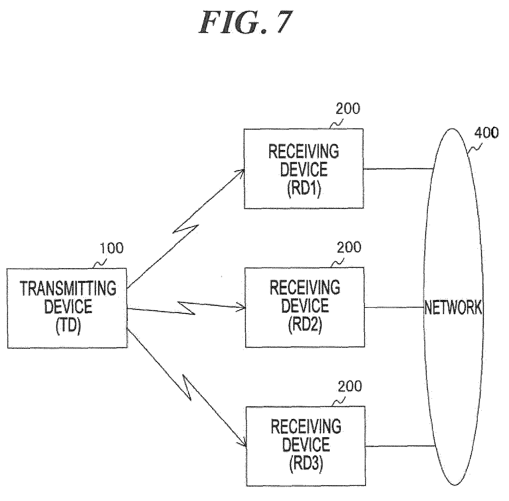

Fig. 7 is a diagram depicting an example of overall architecture of a transmit/receive system according to a second embodiment of the present invention. This transmit/receive system according to the second embodiment includes a transmitting device 100 (TD), a plurality of receiving devices 200 (RD1 to RD3), and a network 400. Although this diagram depicts three receiving devices 200, there may be any number of receiving devices 200 more than one.

A transmitting device 100 transmits a control signal to a receiving device 200 and a receiving device 200 receives a control signal from a transmitting device 100; the roles of these devices are the same as in the first embodiment described previously. The transmitting device 100 is capable of transmitting a control signal to a plurality of receiving devices 200 simultaneously. The hardware structures of the transmitting device 100 and each receiving device 200 are also the same as in the first embodiment described previously.

The network 400 is a network that interconnects the plurality of receiving devices 200. Through this network 400, the plurality of receiving devices 200 communicate with one another, thereby enabling synchronizing verification codes among the receiving devices 100. As this network 400, for example, an ad-hoc communication network based on Bluetooth (a registered trademark) among others can be assumed.

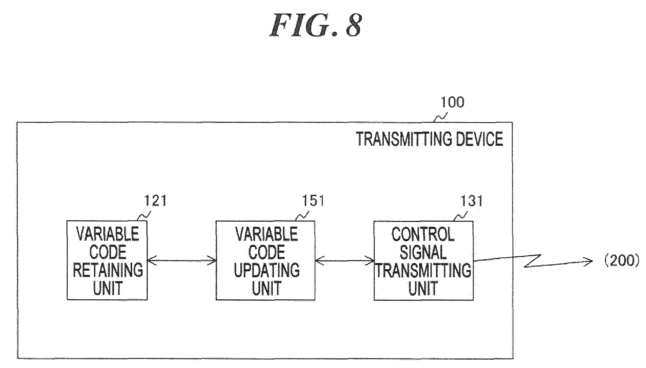

Fig. 8 is a diagram depicting an example of functional structure of the transmitting device 100 according to the second embodiment of the present invention. The transmitting device 100 has the following functions: a variable code retaining unit 121, a control signal transmitting unit 131, and a variable code updating unit 151. These functions are the same as those described for the first embodiment. That is, the transmitting device 100 of the second embodiment is the one in which the functions for synchronizing variable codes are removed from the transmitting device of the first embodiment.

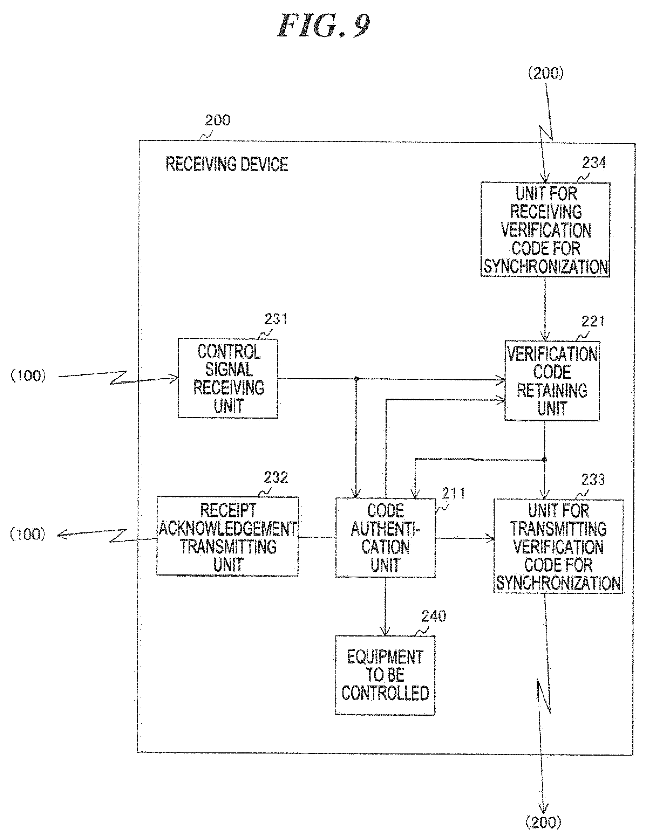

Fig. 9 is a diagram depicting an example of functional structure of each receiving device 200 according to the second embodiment of the present invention. In the hardware structure described previously, each of the plurality of receiving devices 200 includes a code authentication unit 211, a verification code retaining unit 221, a control signal receiving unit 231, a receipt acknowledgement transmitting unit 232, a unit for transmitting verification code for synchronization 233, and a unit for receiving verification code for synchronization 234. That is, each receiving device of the second embodiment is the one in which the functions for synchronizing verification codes are added to the receiving device of the first embodiment.

The unit for transmitting verification code for synchronization 233 transmits an updated verification code through a synchronization signal to other receiving devices 200 to allow those devices to set such code as the latest verification code. This unit for transmitting verification code for synchronization 233 can be implemented, for example, by the control unit 210 and the wireless communication unit 230.

The unit for receiving verification code for synchronization 234 receives an updated verification code through a synchronization signal from any other receiving device 200 and has the updated verification code retained in the verification code retaining unit 221. This unit for receiving verification code for synchronization 234 can be implemented, for example, by the control unit 210 and the wireless communication unit 230.

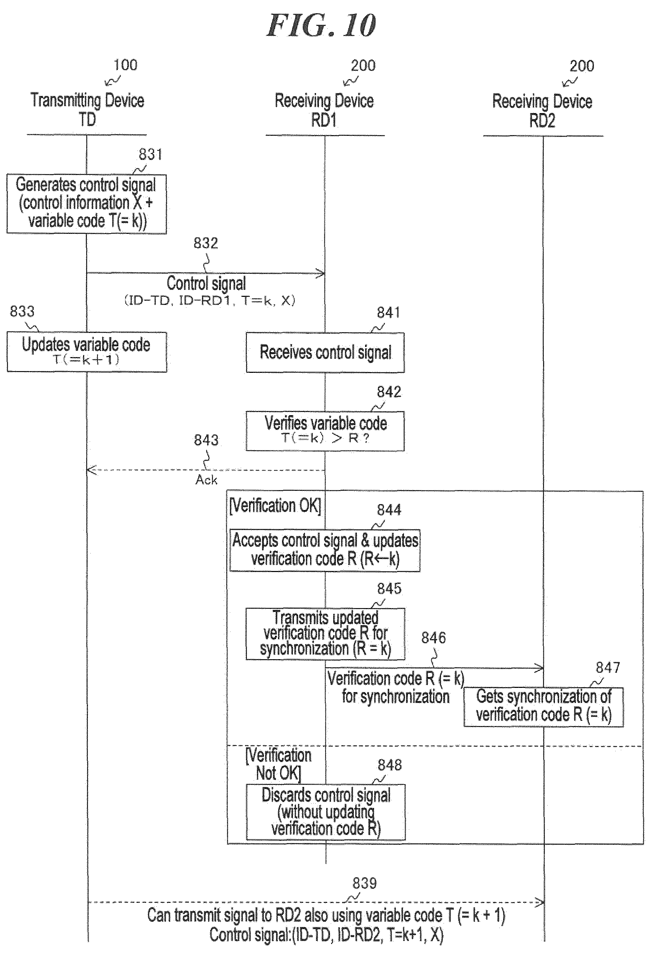

Fig. 10 is a sequence diagram depicting an example of operation according to the second embodiment of the present invention. In this diagram, a control signal is made up of control information X and a variable code T. A header of the control signal includes ID-TD which designates a source transmitting device 100 and ID-RD1 which designates a destination receiving device 200. Each of the receiving devices 200 retains a verification code R. A variable k is used to represent transition of the variable code T and the verification code R.

The transmitting device 100 generates a control signal (831) and transmits it to a receiving device 200 (RD1) (832). After having transmitted the control signal, the transmitting device 100 updates the variable code T from k to k + 1 (833).

Upon receiving the control signal (841) transmitted by the transmitting device 100, the receiving device 200 (RD1) compares the variable code T included in the control signal with the verification code R it has retained beforehand (842). Then, if, by way of example, the value of the variable code T is larger than the value of the verification code R, the receiving device authenticates the received control signal to be valid.

If the authentication is successful, the receiving device 200 (RD1) accepts the control signal and supplies the control signal to the equipment to be controlled 240 (844). In this case, besides, the receiving device updates the verification code R to the value (k) of the variable code T (844). Thereby, the control signal will not be authenticated in next and subsequent authentication actions with the value (k) of the old variable code. Then, the receiving device transmits the updated verification code R to which synchronization should be carried out to another receiving device 200 (RD2) (845). The verification code R thus transmitted is received by a receiving device 200 (RD2) (846) and synchronization is carried out (847).

Otherwise, if the authentication is unsuccessful, the receiving device 200 (RD1) discards the control signal (848). Therefore, the control signal is not supplied to the equipment to be controlled 240 and updating the verification code R is not executed.

If the authentication is successful, the receiving device 200 (RD1) may be adapted to transmit a receipt acknowledgement Ack back to the transmitting device 100 that transmitted the control signal (843).

In this example, when the verification code R is updated to k at the receiving device 200 (RD1), the verification code R is synchronized so as to be updated to k also at the receiving device 200 (RD2). Therefore, subsequently, at the receiving device 200 (RD2) as well as the receiving device 200 (RD1), it will be impossible to properly authenticate the control signal with the old variable code (839).

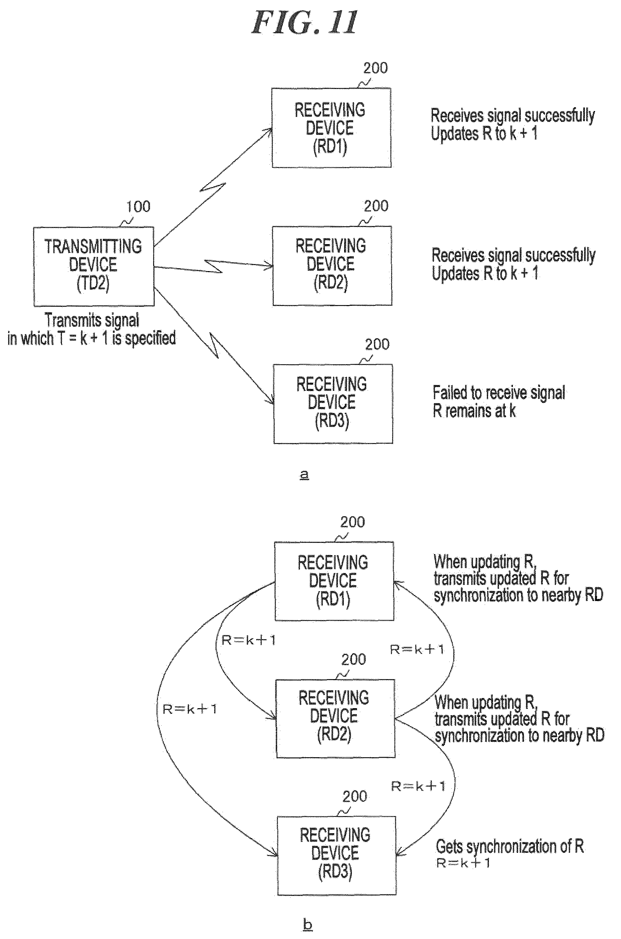

Fig. 11 is a diagram depicting an example of a case where one of the receiving devices 200 failed to update the verification code according to the second embodiment of the present invention. Here, the following state is assumed: each of the receiving devices 200 retains k as the value of the verification code R just before a control signal in which k + 1 is specified as the value of the variable code T is transmitted from the transmitting device 100.

As is depicted in part a of Fig. 11, when control signals in which k + 1 is specified as the value of the variable code T are simultaneously transmitted from the transmitting device 100 to the receiving devices 200 (RD1 to RD3), it is assumed that one (RD3] of the receiving devices 200 fails to receive the control signal and the value of the verification code R at this device remains at k, whereas the verification code R is updated to k + 1 at the remaining two (RD1, RD2) of the receiving devices 200. That is, as this state continues, the receiving device (RD3) may be attacked by replay attack.

In this case, as is depicted in part b of Fig. 11, transmission of the verification code R for synchronization is carried out from the receiving devices 200 (RD1, RD2) to a nearby receiving device 200. Thereby, the verification codes retained by each of the receiving devices 200 can be synchronized and updated to the latest one. That is, even in a case where control signals are simultaneously transmitted from a transmitting device 100 to a plurality of receiving devices 200, it is possible to synchronize the verification codes R properly.

As described above, according to the second embodiment of the present invention, by synchronizing verification codes at a plurality of receiving devices 200, it is possible to transmit control signals from a transmitting device 100 to a plurality of receiving devices 200, while avoiding a replay attack from a third party.

### 3. Third Embodiment

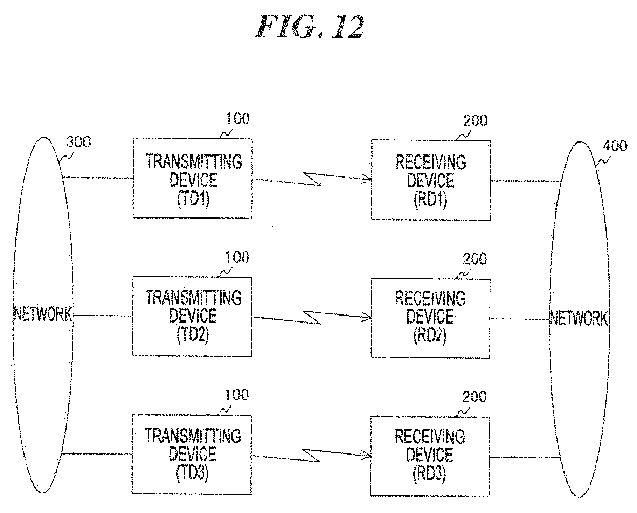

Fig. 12 is a diagram depicting an example of overall architecture of a transmit/receive system according to a third embodiment of the present invention. This transmit/receive system according to the third embodiment includes a plurality of transmitting devices 100 (TD1 to TD3), a plurality of receiving devices 200 (RD1 to RD3), and networks 300 and 400. Although this diagram depicts three transmitting devices 300 and three receiving devices 200, there may be any number of transmission devices 100 more than one and any number of receiving devices 200 more than one.

A transmitting device 100 transmits a control signal to a receiving device 200 and a receiving device 200 receives a control signal from a transmitting device 100; the roles of these devices are the same as in the first and second embodiments described previously. The transmitting device 100 is capable of transmitting a control signal to a plurality of receiving devices 200 simultaneously. The hardware structures of the transmitting devices 100 and the receiving devices 200 are also the same as in the first and second embodiments described previously.

Interconnecting the plurality of transmitting devices 100 by the network 300 and synchronizing variable codes among the transmitting devices 100 are the same as in the first embodiment described previously. Interconnecting the plurality of receiving devices 200 by the network 400 and synchronizing verification codes among the receiving devices 200 are the same as in the second embodiment described previously. That is, in the third embodiment, both synchronizing variable codes among the transmitting devices 100 and synchronizing verification codes among the receiving devices 200 take place.

Each of the plurality of transmitting device 100 according to the third embodiment has the same functional structure as that of the transmitting device 100 according to the first embodiment, which was described with Fig. 4. Each of the plurality of receiving devices 200 according to the third embodiment has the same functional structure as that of the receiving device 200 according to the second embodiment, which was described with Fig. 9.

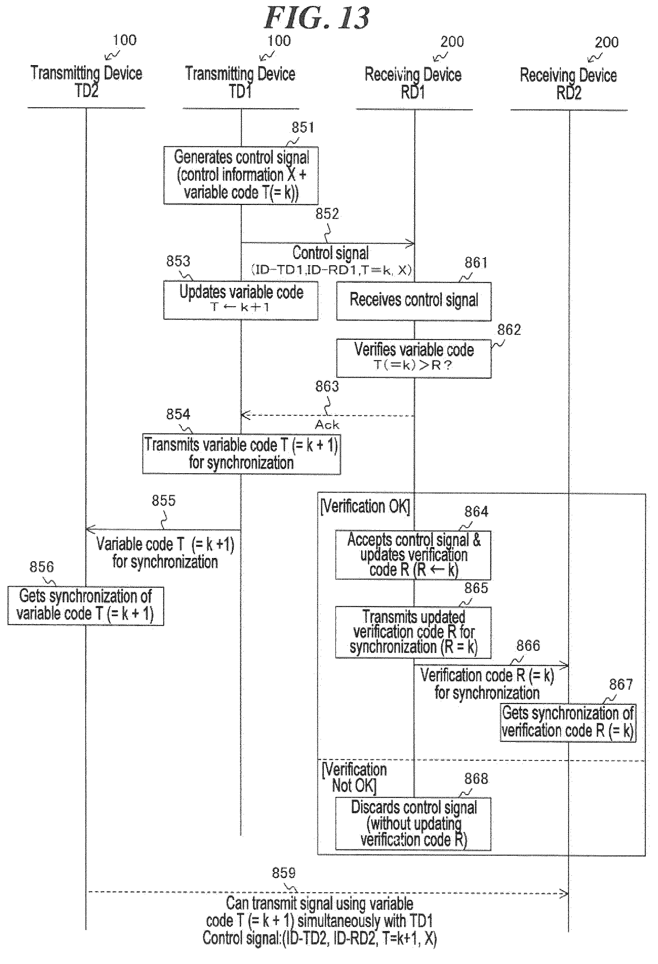

Fig. 13 is a sequence diagram depicting an example of operation according to the third embodiment of the present invention. In this diagram, a control signal is made up of control information X and a variable code T. A header of the control signal includes ID-TD1 which designates a source transmitting device 100 and ID-RD1 which designates a destination receiving device 200. Each of the receiving devices 200 retains a verification code R. A variable k is used to represent transition of the variable code T and the verification code R.

A transmitting device 100 (TD1) generates a control signal (851) and transmits it to a receiving device 200 (RD1) (852). After having transmitted the control signal, the transmitting device 100 (TD1) updates the variable code T from k to k+1(853).

Upon receiving the control signal (861) transmitted by the transmitting device 100, the receiving device 200 (RD1) compares the variable code T included in the control signal with the verification code R it has retained beforehand (862). Then, if, by way of example, the value of the variable code T is larger than the value of the verification code R, the receiving device authenticates the received control signal to be valid.

If the authentication is successful, the receiving device 200 (RD1) accepts the control signal and supplies the control signal to the equipment to be controlled 240 (864). In this case, besides, the receiving device updates the verification code R to the value (k) of the variable code T (864). Thereby, the control signal will not be authenticated in next and subsequent authentication actions with the value (k) of the old variable code T. Then, the receiving device transmits the updated verification code R to which synchronization should be carried out to another receiving device 200 (RD2) (865). The verification code R thus transmitted is received by a receiving device 200 (RD2) (866) and synchronization is carried out (867).

Otherwise, if the authentication is unsuccessful, the receiving device 200 (RD1) discards the control signal (868). Therefore, the control signal is not supplied to the equipment to be controlled 240 and updating the verification code R is not executed.

If the authentication is successful, the receiving device 200 may be adapted to transmit a receipt acknowledgement Ack back to the transmitting device 100 (TD1) that transmitted the control signal (863). In this case, the transmitting device 100 (TD1) that has received the receipt acknowledgement Ack transmits the variable code T updated to k + 1 to which synchronization should be carried out to another transmitting device 100 (TD2) (854). The variable code T thus transmitted is received by a transmitting device 100 (TD2) (855) and synchronization is carried out (856). In contrast, if the transmitting device 100 does not receive an anticipated receipt acknowledgement Ack, the transmitting device 100 only updates the variable code T (853), but does not perform synchronization. After that, the transmitting device may retransmit the transmission signal. In this way, by synchronizing the variable code T only upon having received a receipt acknowledgement Ack, needless synchronization operation can be avoided. Although it is assumed here that the receiving device 200 transmits back a receipt acknowledgement Ack, a manner in which the variable code T is to be synchronized whenever updated may be adopted without the assumption of this receipt acknowledgement Ack.

In this example, when the variable code T is updated from k to k + 1 at the transmitting device 100 (TD1), the variable code T is synchronized so as to be updated to k + 1 also at the transmitting device 100 (TD2). Therefore, subsequently, the transmitting device 100 (TD2) as well as the transmitting device 100 (TD1) can transmit a valid control signal using the variable code T (859). Besides, in this example, when the verification code R is updated to k at the receiving device 200 (RD1), the verification code R is synchronized so as to be updated to k also at the receiving device 200 (RD2). Therefore, subsequently, at the receiving device 200 (RD2) as well as the receiving device 200 (RD1), it will be impossible to authenticate the control signal with the old variable code properly.

As described above, according to the third embodiment of the present invention, an advantageous effect is produced, derived by merging both the first embodiment and the second embodiment. That is, it is possible to share a variable code by synchronizing variable codes at a plurality of transmitting devices 100 and each of the plurality of transmitting devices 100 can communicate with a receiving device 200 using the identical variable code. Besides, by synchronizing verification codes at a plurality of receiving devices 200, it is possible to securely transmit a control signal from a transmitting device 100, while avoiding a replay attack from a third party.

### 4. Fourth Embodiment

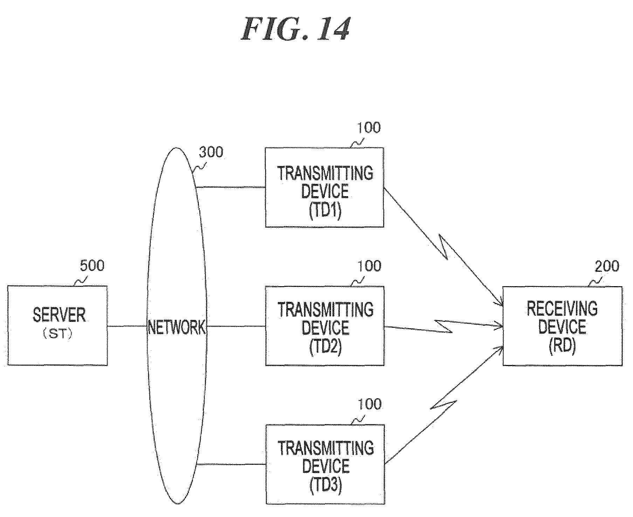

Fig. 14 is a diagram depicting an example of overall architecture of a transmit/receive system according to a fourth embodiment of the present invention. This transmit/receive system according to the fourth embodiment includes a plurality of transmitting devices 100 (TD1 to TD3), a receiving device 200 (RD), a network 300, and a server 500 (ST). That is, this transmit/receive system according to the fourth embodiment has the architecture in which the server 500 is provided newly on the basis of the architecture of the first embodiment and differs from the first embodiment in that synchronizing variable codes is performed via the server 500. Although this diagram depicts three transmitting devices 100, there may be any number of transmitting devices 100 more than one.

A transmitting device 100 transmits a control signal to a receiving device 200 and a receiving device 200 receives a control signal from a transmitting device 100; the roles of these devices are the same as in the first embodiment described previously. The hardware structures of each transmitting device 100 and the receiving device 200 are also the same as in the first embodiment described previously.

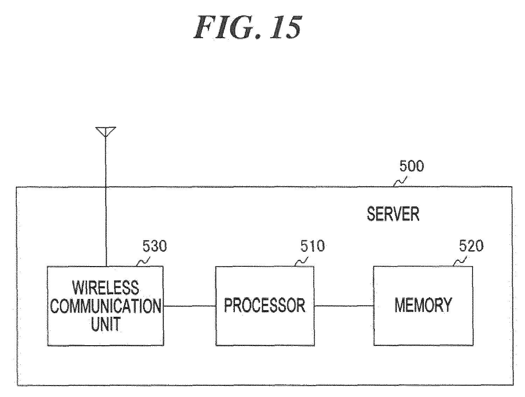

Fig. 15 is a diagram depicting an example of hardware structure of the server 500 according to the fourth embodiment of the present invention. This server 500 includes a processor 510, a memory 520, and a wireless communication unit 530.

The processor 510 controls all parts of the server 500. In particular, the processor 510 executes updating a variable code retained in the memory 520 and executes transmitting/receiving a variable code via the wireless communication unit 530.

The memory 520 is a memory that stores a program running in the server 500, a variable code, etc.

The wireless communication unit 530 performs wireless communication with a transmitting device 100. This wireless communication unit 530 transmits a variable code retained in the memory 520 as a synchronization signal to a transmitting device 100. Besides, it receives a synchronization signal from a transmitting device 100 and supplies that signal to the processor 510.

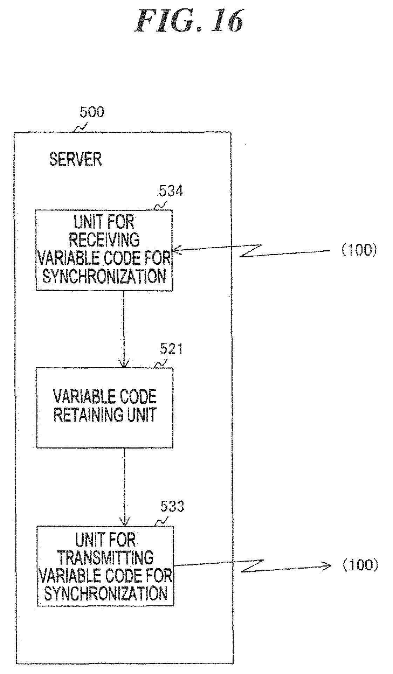

Fig. 16 is a diagram depicting an example of functional structure of the server 500 according to the fourth embodiment of the present invention. In the hardware structure described previously, the server 500 has the following functions: a variable code retaining unit 521, a unit for transmitting variable code for synchronization 533, and a unit for receiving variable code for synchronization 534.

The variable code retaining unit 521 retains a variable code. This variable code retaining unit 521 can be, for example, implemented by the memory 520.

The unit for transmitting variable code for synchronization 533 transmits an updated variable code through a synchronization signal to a transmitting device 100 to allow that device to set such code as the latest variable code. This unit for transmitting variable code for synchronization 533 can be implemented, for example, by the processor 510 and the wireless communication unit 530.

The unit for receiving variable code for synchronization 534 receives an updated variable code through a synchronization signal from a transmitting device 100 and has the updated variable code retained in the variable code retaining unit 521. This unit for receiving variable code for synchronization 534 can be implemented, for example, by the processor 510 and the wireless communication unit 530.

Each transmitting device 100 and the receiving device 200 according to the fourth embodiment have the same functional structures as in the first embodiment described previously. However, while, in the first embodiment, the unit for transmitting variable code for synchronization 133 and the unit for receiving variable code for synchronization 134 of a transmitting device 100 directly perform synchronization of a variable code with another transmitting device 100, the corresponding units in the fourth embodiment perform synchronization of a variable code via the server 500; this differs from the first embodiment.

That is, the unit for transmitting variable code for synchronization 133 notifies the server 500 of an updated variable code. The server 500 notifies other transmitting devices 100 of the received variable code to allow those devices to update the variable code to the latest value.

More particularly, in the fourth embodiment, a transmitting device 100 (TD) which has transmitted a control signal to the receiving device 200 updates the variable code T from k to k +1 and notifies the server 500 of the updated variable code T. Then, the server 500 retains the notified variable code T and notified transmitting devices 100 (TD2 and TD3) of that code.

Although it is assumed in this example that the server 500 notifies a variable code at arbitrary timing, a configuration in which a transmitting device 100 queries the server 500 on the latest variable code at arbitrary timing may be adopted.

In the first embodiment described previously, when a transmitting device 100 updates the variable code, if any other transmitting device 100 is placed in a communication disabled state such as power-off state, synchronization cannot be performed in real time. In contrast, in the fourth embodiment, a variable code is once stored on the server 500 and a transmitting device 100 can query the server 500 on the latest variable code periodically or upon the recovery of communication with the server 500; consequently, it is possible to synchronize variable codes surely.

Since it is only required for a transmitting device 100 that it can obtain the latest variable code at latest before it transmits a signal to the receiving device 200, querying the server 500 on the latest variable code may be added as processing when transmitting a signal to the receiving device 200.

### 5. Fifth Embodiment

In the fourth embodiment described previously, a configuration is adopted such that a variable code is managed at each of the plurality of transmitting devices 100 and variable codes managed at the respective devices are synchronized via the server 500. That is, the server 500 solely retains a variable code and is not provided with a managing means such as a counter. In contrast, in the fifth embodiment, a configuration is adopted in which the server 500 is responsible for variable code management in an integrated fashion and makes variable code synchronization by notifying a plurality of transmitting devices 100 of a variable code. A transmit/receive system of the fifth embodiment is assumed to have the same overall architecture as for the fourth embodiment described previously.

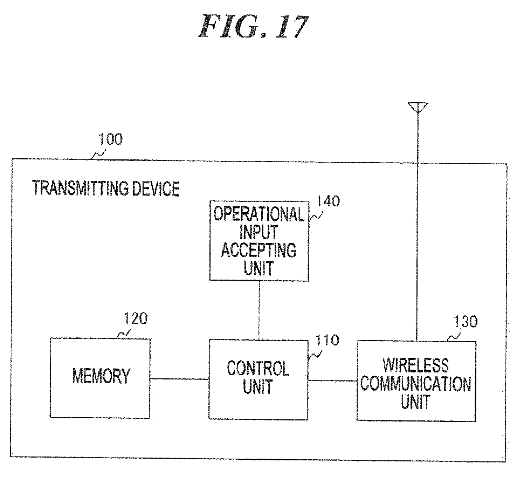

Fig. 17 is a diagram depicting an example of hardware structure of a transmitting device 100 according to the fifth embodiment of the present invention. This transmitting device 100 includes a control unit 110, a memory 120, a wireless communication unit 130, and an operational input accepting unit 140. That is, this transmitting device 100 according to the fifth embodiment has the structure in which only the counter 150 is removed from the transmitting device 100 according to the first embodiment. Therefore, the transmitting device 100 according to the fifth embodiment does not execute updating a variable code, though the variable code is retained in the memory 120.

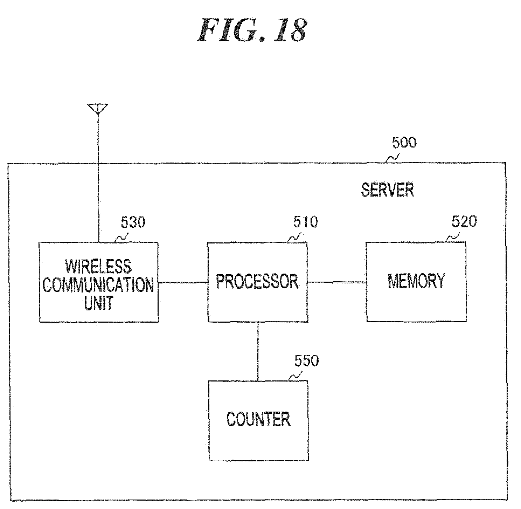

Fig. 18 is a diagram depicting an example of hardware structure of a server 500 according to the fifth embodiment of the present invention. This server 500 includes a processor 510, a memory 520, a wireless communication unit 530, and a counter 550. That is, this server 500 according to the fifth embodiment has the structure in which the counter 550 is added to the server 500 according to the fourth embodiment, which was described with Fig. 15. Through the use of the counter 550, this server 500 updates a variable code retained in the memory 520.

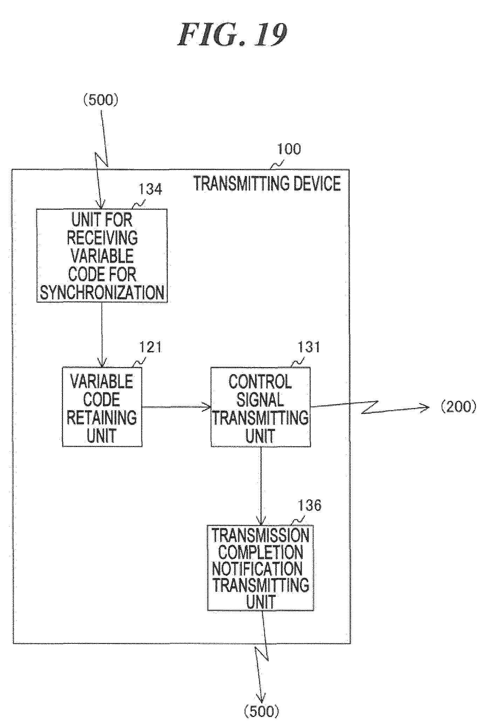

Fig. 19 is a diagram depicting an example of functional structure of a transmitting device 100 according to the fifth embodiment of the present invention. In the hardware structure described previously, each of the plurality of transmitting devices 100 has the following functions: a variable code retaining unit 121, a control signal transmitting unit 131, a unit for receiving variable code for synchronization 134, and a transmission completion notification transmitting unit 136. That is, as compared with the transmitting device 100 according to the first embodiment, its functional structure is such that the variable code updating unit 151, the receipt acknowledgement receiving unit 132, and the unit for transmitting variable code for synchronization 133 are removed and the transmission completion notification transmitting unit 136 is added.

Once the control signal transmitting unit 131 has transmitted a control signal, the transmission completion notification transmitting unit 136 notifies the server 500 that the device has completed transmission of the control signal. Upon having received this notification, the server 500 is to update a variable code. Therefore, a transmitting device 100 no longer needs to have the variable code updating function. This transmission completion notification transmitting unit 136 can be implemented, for example, by the control unit 110 and the wireless communication unit 130.

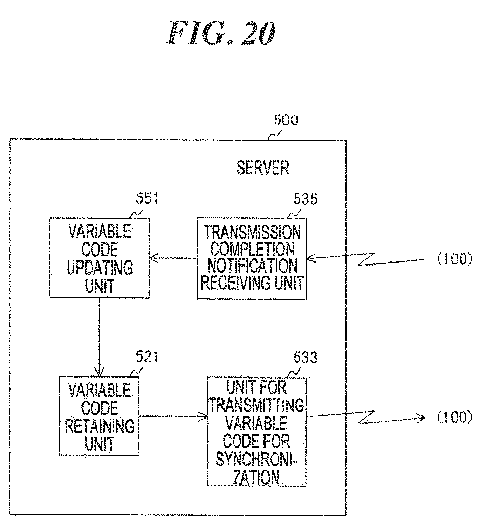

Fig. 20 is a diagram depicting an example of functional structure of the server 500 according to the fifth embodiment of the present invention. In the hardware structure described previously, the server 500 has the following functions: a variable code retaining unit 521, a unit for transmitting variable code for synchronization 533, a transmission completion notification receiving unit 535, and a variable code updating unit 551. That is, as compared with the server 500 according to the fourth embodiment, its functional structure is such that the unit for receiving variable code for synchronization 534 is removed and the transmission completion notification receiving unit 535 and the variable code updating unit 551 are added.

The transmission completion notification receiving unit 535 receives control signal transmission completion notification from a transmitting device 100. Upon receiving the transmission completion notification, this transmission completion notification receiving unit 535 instructs the variable code updating unit 551 to update a variable code. This transmission completion notification receiving unit 535 can be implemented, for example, by the processor 510 and the wireless communication unit 530.

The variable code updating unit 551 updates a variable code, as instructed from the transmission completion notification receiving unit 535. This variable code updating unit 551 can be implemented, for example, by the processor 510 and the wireless communication unit 530.

In the fifth embodiment, in case a transmitting device 100 is unable to communicate with the server 500 for a period because its power is off or for other reason, the transmitting device 100 queries the server 500 on the latest variable code value upon the recovery of communication or before transmitting a control signal to the receiving device 200.

More particularly, in the fifth embodiment, a transmitting device 100 (TD1) that has transmitted a control signal to the receiving device 200 notifies the server 500 of completion of transmission. Upon having received this transmission completion notification, the server 500 updates the variable code T through the variable code updating unit 551 inside it. Then, the server 500 notifies the transmitting devices 100 (TD1 to TD3) of the updated variable code T.

As described above, according to the fifth embodiment, variable code management is not performed at the transmitting devices 100 and such management is performed in an integrated fashion at the server 500; consequently, the structure of each of the plurality of transmitting devices 100 can be simplified.

### 6. Sixth Embodiment

As described previously, an example in which variable code management is performed at each transmitting device 100 was presented in the fourth embodiment, whereas an example in which variable code management is performed at the server 500 was presented in the fifth embodiment. In contrast, in a sixth embodiment, it is assumed that authentication is performed by combination of both of a variable code T1 which is managed at each transmitting device 100 and a variable code T2 which is managed at the server 500.

A transmit/receive system of the sixth embodiment is assumed to have the same overall architecture as for the fourth or fifth embodiment described previously. A transmitting device 100 transmits a control signal to a receiving device 200 and a receiving device 200 receives a control signal from a transmitting device 100; the roles of these devices are the same as in the first embodiment described previously. The hardware and functional structures of a transmitting device 100 and a receiving device 200 are also the same as in the first embodiment described previously. The hardware and functional structures of the server 500 are the same as in the fifth embodiment.

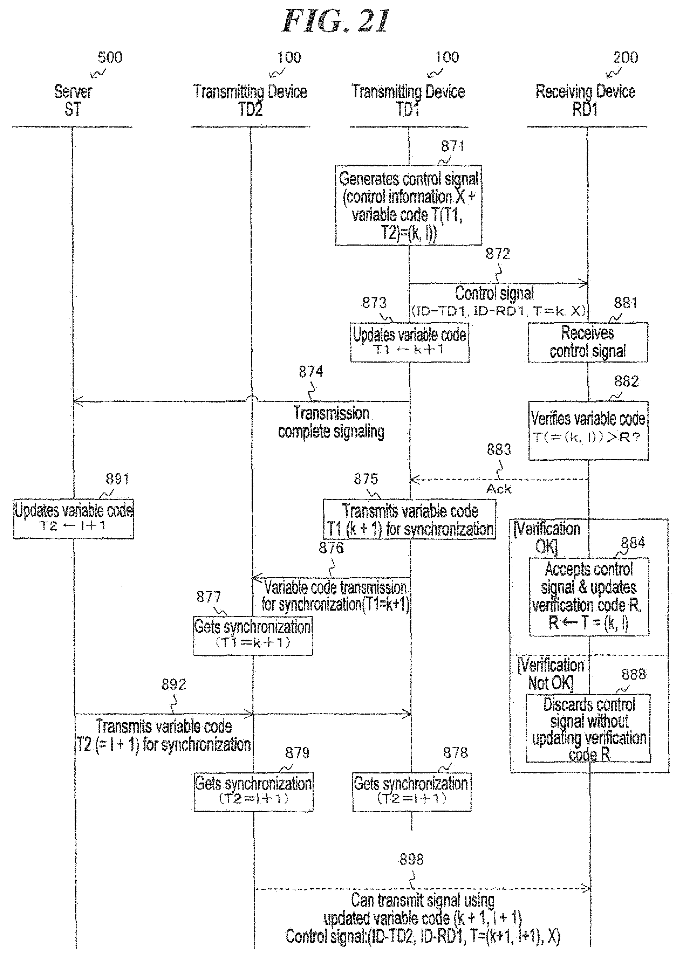

Fig. 21 is a sequence diagram depicting a first example of operation according to the sixth embodiment of the present invention. In this diagram, a control signal is made up of control information X and a variable code T (T1, T2). A header of the control signal includes ID-TD1 which designates a source transmitting device 100 and ID-RD1 which designates a destination receiving device 200. Each receiving device 200 retains a verification code R.

In the sixth embodiment, authentication is performed by combination of a variable code T1 which is managed at each transmitting device 100 and a variable code T2 which is managed at the server 500. A variable k is used to represent transition of the variable code T1 and a variable l is used to represent transition of the variable code T2 which is managed at the server 500.

A transmitting device 100 (TD1) generates a control signal (871) and transmits it to a receiving device 200 (RD1) (872). A variable code T at this time is a combination of variable codes T1 and T2 and is represented by one numeral, such as T = 100 x T2 + T1. If T1 = k - 1 and T2 = l = 1, the variable code T transmitted by the transmitting device 100 (TD1) at this time is "101". After having transmitted the control signal, the transmitting device 100 (TD1) updates the variable code T1 from k to k + 1 = 2 (873). Thereby, the variable code T retained by the transmitting device 100 (TD1) at this time becomes "102". At or almost at the same time, the transmitting device 100 (TD1) sends the server 500 transmission completion notification which indicates that the device has completed transmission of the control signal (874).

Upon receiving the control signal (881) transmitted by the transmitting device 100, the receiving device 200 (RD1) compares the variable code T included in the control signal with the verification code R it has retained beforehand (882). Then, if, by way of example, the value of the variable code T is larger than the value of the verification code R, the receiving device authenticates the received control signal to be valid.

If the authentication is successful, the receiving device 200 (RD1) accepts the control signal and supplies the control signal to the equipment to be controlled 240 (884). In this case, besides, the receiving device updates the verification code R to the value (k,l) of the variable code T (884). Thereby, the control signal will not be authenticated in next and subsequent authentication actions with the value (k,l) of the old variable code T.

Otherwise, if the authentication is unsuccessful, the receiving device 200 (RD1) discards the control signal (888). Therefore, the control signal is not supplied to the equipment to be controlled 240 and updating the verification code R is not executed.

If the authentication is successful, the receiving device 200 may be adapted to transmit a receipt acknowledgement Ack back to the transmitting device 100 (TD1) that transmitted the control signal (883). In this case, the transmitting device 100 (TD1) that has received the receipt acknowledgement Ack transmits the variable code T1 updated to k + 1 to which synchronization should be carried out to another transmitting device 100 (TD2) (875). The variable code T1 thus transmitted is received by a transmitting device 100 (TD2) (876) and synchronization is carried out (877). In contrast, if the transmitting device 100 does not receive an anticipated receipt acknowledgement Ack, the transmitting device 100 only updates the variable code T1 (873), but does not perform synchronization. After that, the transmitting device may retransmit the transmission signal. In this way, by synchronizing the variable code T1 only upon having received a receipt acknowledgement Ack, needless synchronization operation can be avoided. Although it is assumed here that the receiving device 200 transmits back a receipt acknowledgement Ack, a manner in which the variable code T1 is to be synchronized whenever updated may be adopted without the assumption of this receipt acknowledgement Ack.

Upon having received the transmission complete signaling (874) from the transmitting device 100 (TD1), the server 500 updates the variable code T2 from l to I + 1 (891). Then, the server transmits the variable code T2 updated to l + 1 to which synchronization should be carried out to each of the transmitting devices 100 (892). The variable code T2 thus transmitted is received by each of the transmitting devices 100 and synchronization is carried out (878, 879).

The variable code T retained by the transmitting device 100 (TD2) at this time becomes "202". When transmitting a control signal next time, the transmitting device 100 (TD2) appends the updated variable code T (= 202) to the control signal (898). Then, at the receiving device 200 (RD1) receiving this control signal, the control signal will be authenticated successfully, because the variable code T (= 202) becomes larger than the verification code R (= 101).

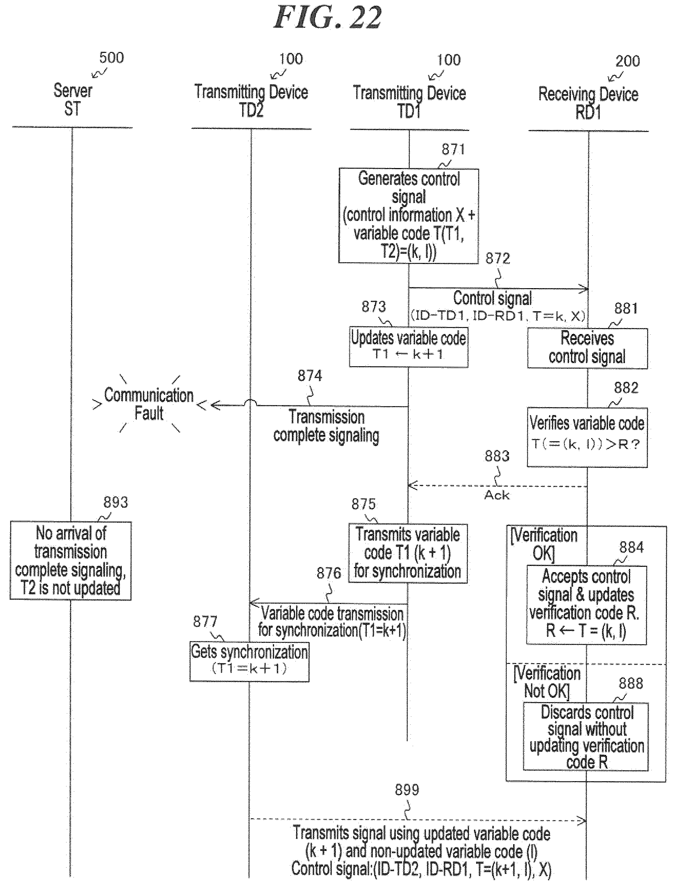

Fig. 22 is a sequence diagram depicting a second example of operation according to the sixth embodiment of the present invention. In this example, it is assumed that, when the transmitting device 100 (TD1) sends the server 500 transmission completion notification (874), a communication fault has occurred in communication with the server 500. Therefore, updating the variable code T2 is not executed at the server 500. Even if transmission completion notification has arrived and the variable code T2 has been updated, the updated variable code T2 is not transmitted to the transmitting devices 100 for synchronization.

Consequently, the state at the point of time when the variable code T1 was synchronized (877) at the transmitting device 100 (TD2) continues and the variable code T at this time becomes "102". When transmitting a control signal next time, the transmitting device 100 (TD2) appends the updated variable code T (= 102) to the control signal (899). Again in this case, at the receiving device 200 (RD1) receiving this control signal, the control signal will be authenticated successfully, because the variable code T (= 102) becomes larger than the verification code R (= 101). That is, even in case a communication fault has occurred in communication between a transmitting device 100 and the server 500, authentication can be performed successfully, because the condition that variable code T > verification R is fulfilled. In this case, updating the variable code T2 should be executed upon the recovery of communication between the transmitting device 100 and the server 500 from the communication fault. Thereby, the variable code T at the transmitting devices will become "202". Although an instance in which a communication fault has occurred in communication between a transmitting device 100 and the server 500 is assumed here, authentication can be performed similarly even in an instance in which a communication fault has occurred in communication between transmitting devices 100.

As described above, according to the sixth embodiment, by distributing variable codes T into a variable code T1 which is managed at each transmitting device 100 and a variable code T2 which is managed at the server 500, even if a fault occurs in any one communication path, making it impossible to transmit a variable code for synchronization, authentication can be performed by updating and synchronizing the other variable code. As illustrated, such an embodiment is preferable that updating the variable code T2 which is managed at the server 500 can absorb updating the variable code T1 which is managed at each transmitting device 100. Besides, even if communication with the server 500 cannot be performed temporarily, it is possible to pass authentication at the receiving device 200 by updating the variable code T1 which is managed at each transmitting device 100. That is, as long as there is normal operation in either of communication between transmitting devices 100 and communication between a transmitting device 100 and the server 500, update of variable code and synchronization can be performed properly.

### 7. Seventh Embodiment

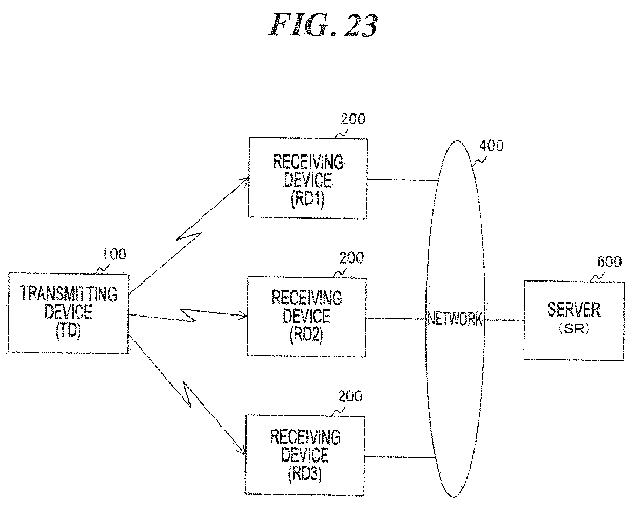

Fig. 23 is a diagram depicting an example of overall architecture of a transmit/receive system according to a seventh embodiment of the present invention. This transmit/receive system according to the seventh embodiment includes a transmitting device 100 (TD), a plurality of receiving devices 200 (RD1 thru RD3), a network 400, and a server 600 (SR). That is, this transmit/receive system according to the seventh embodiment has the architecture in which the server 600 is provided newly on the basis of the architecture of the second embodiment and differs from the second embodiment in that synchronizing verification codes is performed via the server 600. Although this diagram depicts three transmitting devices 100, there may be any number of transmitting devices 100 more than one.

A transmitting device 100 transmits a control signal to a receiving device 200 and a receiving device 200 receives a control signal from a transmitting device 100; the roles of these devices are the same as in the second embodiment described previously.

The server 600 executes synchronizing verification codes among the plurality of receiving devices 200. This server 600 is embodied like the server 500 according to the fourth to sixth embodiments described previously; i.e., it is adapted to take the same role as that of the server 500. That is, as the server 500 according to the fourth embodiment retains a variable code, so the server 600 may retain a verification code and verification code management may be performed at each receiving device 200. Besides, as the server 500 according to the fifth embodiment manages a variable code, so the server 600 may manage a verification code and each receiving device 200 may receive the verification code from the server 600. Moreover, as authentication is performed by combination of a variable code T1 which is managed at each transmitting device 100 and a variable code T2 which is managed at the server 500, so authentication may be performed by combination of a verification code R1 which is managed at each receiving device 200 and a verification code R2 which is managed at the server 600.

As described above, according to the seventh embodiment, it is possible to synchronize verification codes surely through the use of the server 600.

### 8. Eighth Embodiment

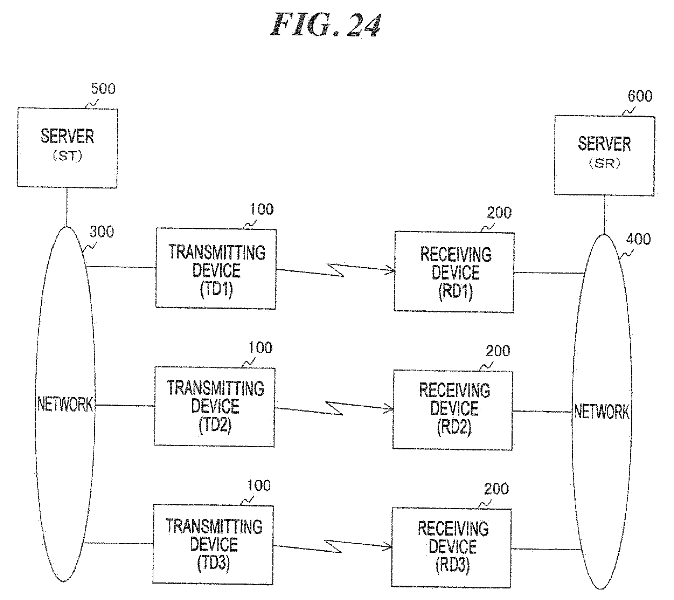

Fig. 24 is a diagram depicting an example of overall architecture of a transmit/receive system according to an eighth embodiment of the present invention. This transmit/receive system according to the eighth embodiment includes a plurality of transmitting devices 100 (TD1 to TD3), a plurality of receiving devices 200 (RD1 to RD3), networks 300 and 400, and a server (ST) 500 and a server (SR) 600. That is, this transmit/receive system according to the eighth embodiment has the architecture in which the servers 500 and 600 are provided newly on the basis of the architecture of the third embodiment and differs from the third embodiment in that synchronizing variable codes or verification codes is performed via the servers 500 and 600. Although this diagram depicts three transmitting devices 100, there may be any number of transmitting devices 100 more than one.

A transmitting device 100 transmits a control signal to a receiving device 200 and a receiving device 200 receives a control signal from a transmitting device 100; the roles of these devices are the same as in the third embodiment described previously.

The server 500 executes synchronizing verification codes among the plurality of transmitting devices 100. This server 500 is embodied like the server 500 according to the fourth to sixth embodiments described previously.

The server 600 executes synchronizing verification codes among the plurality of receiving devices 200. This server 600 is embodied like the server 600 according to the seventh embodiment described previously. That is, it can take the same role as that of the server 500 according to the fourth to sixth embodiments described previously.

These servers 500 and 600 may be physically different server devices or one server device may be shared and provided with the respective functions of the servers 500 and 600.

As described above, according to the eighth embodiment, it is possible to synchronize variable codes surely through the use of the server 500 and, besides, synchronize verification codes surely through the use of the server 600.

The embodiments described previously are exemplary for embodying the present invention and matters described in the embodiments respectively have correspondence relations with matters specifying the invention set forth in the claims. Likewise, matters specifying the invention set forth in the claims respectively have correspondence relations with matters termed the same as those matters, described in the embodiments of the invention. However, the present invention is not limited to the embodiments and can be embodied by making various modifications to the embodiments without departing from the gist of the invention.

A processing procedure explained in the embodiments described previously may be regarded as a method having a series of procedural steps and, besides, may be regarded as a program for causing a computer to execute the series of procedural steps or a recording medium which stores the program. As this recording medium, for example, a CD (Compact Disc), MD (MiniDisc), DVD (Digital Versatile Disc), memory card, Blu-ray (a registered trademark) Disc, etc. can be used.

### Reference Signs List

100: transmitting device,
110: control unit,
120: memory,
121: variable code retaining unit,
130: wireless communication unit,
131: control signal transmitting unit,
132: receipt acknowledgement receiving unit,
133: unit for transmitting variable code for synchronization,
134: unit for receiving variable code for synchronization,
136: transmission completion notification transmitting unit,
140: operational input accepting unit,
150: counter,
151: variable code updating unit,
200: receiving device,
210: control unit,
211: code authentication unit,
220: memory,
221: verification code retaining unit,
230: wireless communication unit,
231: control signal receiving unit,
232: receipt acknowledgement transmitting unit, 233: unit for transmitting verification code for synchronization,
234: unit for receiving verification code for synchronization,
240: equipment to be controlled,
300, 400: network,
500, 600: server,
510: processor,
520: memory,
521: variable code retaining unit,
530: wireless communication unit,
533: unit for transmitting variable code for synchronization,
534: unit for receiving variable code for synchronization,
535: transmission completion notification receiving unit,
550: counter,
551: variable code updating unit.

## Claims

1. A transmit/receive system comprising a plurality of transmitting devices which can communicate with one another and a receiving device,
each of the plurality of transmitting devices comprising:
a variable code retaining unit that retains a variable code;
a control signal transmitting unit that transmits a control signal including the variable code; and
a unit for transmitting variable code for synchronization that transmits the variable code updated after transmission of the control signal to other transmitting devices of the plurality of transmitting devices to allow the other transmitting devices to set such code as the latest variable code,
the receiving device comprising:
a verification code retaining unit that retains a verification code; and
a code authentication unit that authenticates whether or not the control signal is valid by comparing the variable code included in the control signal received from any of the plurality of transmitting devices with the verification code, supplies the control signal authenticated to be valid to equipment to be controlled, and has the variable code included in the control signal authenticated to be valid retained in the verification code retaining unit as a new verification code.

2. The transmit/receive system according to claim 1, wherein:
the receiving device further comprises a receipt acknowledgement transmitting unit that, if the control signal received from any of the plurality of transmitting devices has been authenticated to be valid, sends a notification of having received the control signal to the transmitting device that transmitted the control signal; and the unit for transmitting variable code for synchronization performs the transmission of the updated variable code, after having received the notification from the receiving device.

3. The transmit/receive system according to claim 1, wherein,
the unit for transmitting variable code for synchronization, when attempting to perform the transmission of the updated variable code, in case communication with one of other transmitting devices which is the destination to transmit is put in a disabled state, performs the transmission of the updated variable code after recovery of the communication to an enabled state.

4. The transmit/receive system according to claim 1, wherein:
each of the plurality of transmitting devices further comprises a variable code updating unit that updates the variable code by incrementing the code value after transmission of the control signal; and
the code authentication unit authenticates the variable code to be valid, if the value of the variable code is larger than the value of the verification code.

5. The transmit/receive system according to claim 1, further comprising a server that connects with each of the plurality of transmitting devices via a network,
wherein the unit for transmitting variable code for synchronization performs the transmission of the updated variable code via the server.

6. The transmit/receive system according to claim 5, wherein,
the unit for transmitting variable code for synchronization, when attempting to perform the transmission of the updated variable code, in case communication with the server is put in a disabled state, performs the transmission of the updated variable code after recovery of the communication to an enabled state.

7. The transmit/receive system according to claim 5, wherein,
the server, when attempting to perform the transmission of the updated variable code, in case communication with at least one transmitting device of the plurality of transmitting devices is put in a disabled state, performs the transmission of the updated variable code after recovery of the communication to an enabled state to the transmitting device with which the communication has become enabled.

8. The transmit/receive system according to claim 5, wherein,
the unit for transmitting variable code for synchronization, in case communication with the server becomes disabled, requests the server to transmit the latest variable code after recovery of the communication to an enabled state.

9. The transmit/receive system according to claim 1, further comprising a server that connects with each of the plurality of transmitting devices via a network,
the server comprising:
a server-side variable code retaining unit that retains the variable code;
a server-side variable code updating unit that updates the variable code, which is retained in the server-side variable code retaining unit, each time the server receives transmission completion notification from one of the transmitting devices; and
a server-side unit for transmitting variable code for synchronization that transmits the variable code after being updated to each of the plurality of transmitting devices to allow those devices to set such code as the latest variable code,
wherein, once the control signal transmitting unit has transmitted the control signal, the unit for transmitting variable code for synchronization sends the server transmission completion notification that triggers the server-side variable code updating unit to update the variable code and the server-side unit for transmitting variable code for synchronization to transmit the updated variable code to other transmitting devices of the plurality of transmitting devices to allow the other transmitting devices to set the updated variable code as the latest variable code.

10. The transmit/receive system according to claim 1, further comprising a server that connects with each of the plurality of transmitting devices via a network,
the variable code comprising first and second variable codes,
the server comprising:
a server-side variable code retaining unit that retains the second variable code; and
a server-side variable code updating unit that updates the second variable code, which is retained in the server-side variable code retaining unit, each time the server receives the transmission completion notification from one of the transmitting devices,
wherein:
the variable code retaining unit retains the first and second variable codes;
the control signal transmitting unit transmits a control signal including the first and second variable codes;
once the control signal transmitting unit has transmitted the control signal, the unit for transmitting variable code for synchronization updates the first variable code and transmits the updated first variable code to other transmitting devices of the plurality of transmitting devices to allow the other transmitting devices to set such code as the latest first variable code, and, besides, sends the server transmission completion notification that triggers the server-side variable code updating unit to update the variable code and the server-side unit for transmitting variable code for synchronization to transmit the updated variable code to other transmitting devices of the plurality of transmitting devices to allow the other transmitting devices to set the updated variable code as the latest variable code; and
the code authentication unit authenticates whether or not the control signal is valid by comparing at least one of the first and second variable codes included in the control signal received from any of the plurality of transmitting devices with the verification code, supplies the control signal authenticated to be valid to equipment to be controlled, and has the first and second variable codes included in the control signal authenticated to be valid retained in the verification code retaining unit as a new verification code.

11. The transmit/receive system according to claim 1, wherein:
the receiving device is a plurality of receiving devices which can communicate with one another; and
each of the plurality of receiving devices further comprises a unit for transmitting verification code for synchronization that transmits the new verification code to other receiving devices of the plurality of receiving devices to allow the other receiving devices to set the new verification code as the latest verification code.

12. The transmit/receive system according to claim 1, further comprising:
a first server that connects with each of the plurality of transmitting devices via a first network; and
a second server that connects with each of the plurality of receiving devices via a second network,
wherein:
the unit for transmitting variable code for synchronization performs the transmission of the updated variable code via the first server; and
the unit for transmitting verification code for synchronization performs the setting of the new verification code via the second server.

13. A transmitting device comprising:
a variable code retaining unit that retains a variable code;
a control signal transmitting unit that transmits a control signal including the variable code to a receiving device; and
a unit for transmitting variable code for synchronization that transmits the variable code updated after transmission of the control signal to other transmitting devices that can transmit the control signal to the receiving device to allow the other transmitting devices to set such code as the latest variable code.

14. A program causing a computer to serve as a transmitting device, the program causing the computer to perform a procedure comprising:
a control signal transmitting step that transmits a control signal including a variable code to a receiving device; and
a step of transmitting variable code for synchronization that transmits the variable code updated after transmission of the control signal to other transmitting devices that can transmit the control signal to the receiving device to allow the other transmitting devices to set such code as the latest variable code.

15. A communication control method for use in a transmit/receive system comprising a plurality of transmitting devices which can communicate with one another and a receiving device, the communication control method comprising:
a control signal transmitting step in which any of the plurality of transmitting devices transmits a control signal including a variable code;
a control signal receiving step in which the receiving device receives the control signal transmitted from the transmitting device;
a code authentication step in which the receiving device authenticates whether or not the control signal is valid by comparing the variable code included in the control signal received from any of the plurality of transmitting devices with a verification code which has been set beforehand, supplies the control signal authenticated to be valid to equipment to be controlled, and sets the variable code included in the control signal authenticated to be valid as a new verification code; and
a step of transmitting variable code for synchronization in which a transmitting device that transmitted the control signal transmits the variable code which has been updated to other transmitting devices of the plurality of transmitting devices to allow the other transmitting devices to set such code as the latest variable code.

16. A transmit/receive system comprising a transmitting device and a plurality of receiving devices which can communicate with one another,
the transmitting device comprising:
a variable code retaining unit that retains a variable code;
a control signal transmitting unit that transmits a control signal including the variable code; and
a variable code updating unit that updates the variable code after transmission of the control signal,
each of the plurality of receiving devices comprising:
a verification code retaining unit that retains a verification code;
a code authentication unit that authenticates whether or not the control signal is valid by comparing the variable code included in the control signal received from the transmitting device with the verification code, supplies the control signal authenticated to be valid to equipment to be controlled, and has said variable code included in the control signal authenticated to be valid retained in the verification code retaining unit as a new verification code; and
a unit for transmitting verification code for synchronization that transmits said new verification code to other receiving devices of the plurality of receiving devices to allow the other receiving devices to set such code as the latest verification code.

17. The transmit/receive system according to claim 16, further comprising a sever that connects with each of the plurality of receiving devices via a network,
wherein the unit for transmitting verification code for synchronization performs the setting of the new verification code via the server.

18. A receiving device comprising:
a verification code retaining unit that retains a verification code;
a control signal receiving unit that receives a control signal including a variable code from a transmitting device;
a code authentication unit that authenticates whether or not the control signal is valid by comparing the variable code included in the control signal received from the transmitting device with the verification code, supplies the control signal authenticated to be valid to equipment to be controlled, and has the variable code included in the control signal authenticated to be valid retained in the verification code retaining unit as a new verification code; and
a unit for transmitting verification code for synchronization that transmits the new verification code to other receiving devices that can receive the control signal from the transmitting device to allow the other receiving devices to set such code as the latest verification code.

19. A program causing a computer to serve as a receiving device, the program causing the computer to perform a procedure comprising:
a control signal receiving step that receives a control signal including a variable code from a transmitting device;
a code authentication step that authenticates whether or not the control signal is valid by comparing the variable code included in the control signal received from the transmitting device with a verification code which has been set beforehand, supplies the control signal authenticated to be valid to equipment to be controlled, and sets the variable code included in the control signal authenticated to be valid as a new verification code; and
a step of transmitting verification code for synchronization that transmits the new verification code to other receiving devices that can receive the control signal from the transmitting device to allow the other receiving devices to set such code as the latest verification code.

20. A communication control method for use in a transmit/receive system comprising a transmitting device and a plurality of receiving devices which can communicate with one another, the communication control method comprising:
a control signal transmitting step in which the transmitting device transmits a control signal including a variable code;
a variable code updating step in which the transmitting device updates the variable code after transmission of the control signal;
a control signal receiving step in which any of the plurality of receiving devices receives the control signal transmitted from the transmitting device;
a code authentication step in which any of the plurality of receiving devices authenticates whether or not the control signal is valid by comparing the variable code included in the control signal received from the transmitting device with the verification code, supplies the control signal authenticated to be valid to equipment to be controlled, and has the variable code included in the control signal authenticated to be valid retained in the verification code retaining unit as a new verification code; and
a step of transmitting verification code for synchronization in which any of the plurality of receiving devices transmits the new verification code to other receiving devices of the plurality of receiving devices to allow the other receiving devices to set such code as the latest verification code.
